(19) Europäisches Patentamt
European Patent Office
Office européen des brevets

(11) **EP 4 636 934 A1**

(12) **EUROPEAN PATENT APPLICATION**

(43) Date of publication:
**22.10.2025 Bulletin 2025/43**

(21) Application number: **25169040.0**

(22) Date of filing: **08.04.2025**

(51) International Patent Classification (IPC):
$H01M\ 50/516^{(2021.01)}$    $H01M\ 50/528^{(2021.01)}$
$H01M\ 50/55^{(2021.01)}$    $B23K\ 26/20^{(2014.01)}$
$H01M\ 50/507^{(2021.01)}$    $H01M\ 50/557^{(2021.01)}$
$H01M\ 50/566^{(2021.01)}$    $H01M\ 50/502^{(2021.01)}$

(52) Cooperative Patent Classification (CPC):
**H01M 50/502; B23K 26/20; H01M 50/209;
H01M 50/516;** H01M 50/55; H01M 50/557

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.04.2024 KR 20240051526**

(71) Applicant: **SAMSUNG SDI CO., LTD.
Yongin-si, Gyeonggi-do 17084 (KR)**

(72) Inventor: **KIM, Jeong Nam
16678 Suwon-si (KR)**

(74) Representative: **Marks & Clerk LLP
15 Fetter Lane
London EC4A 1BW (GB)**

(54) **BATTERY MODULE**

(57) A battery module includes a plurality of battery cells, a bus bar configured to electrically connect at least two of battery cells, and bonding portions configured to bond the battery cells to the bus bar. Each of the bonding portions includes a first bonding portion formed on a first region of one of the battery cells, and a second bonding portion formed on a second region of the battery cell, with the second bonding portion being larger than the first bonding portion.

FIG. 4

## Description

### BACKGROUND

### Technical Field

The present disclosure relates to a battery module capable of providing a weld geometry between a battery module and a bus bar.

### Description of the Related Art

Unlike a primary battery that cannot be recharged, a secondary battery can be charged and discharged. A low-capacity secondary battery is used for portable small-sized electronic devices, such as smartphones, feature phones, notebook computers, digital cameras, and camcorders. A high-capacity secondary battery is widely used as a power source for driving a motor and a power storage battery in hybrid vehicles, electric vehicles, or the like. Such a battery includes a positive electrode and a negative electrode, an electrode assembly including the electrodes, a case that accommodates the electrode assembly, electrode terminals connected to the electrode assembly, and the like.

As technology advances, batteries with higher capacity are required. Accordingly, a plurality of batteries may be electrically connected and used together. For example, the battery may be used in an electronic device in the form of a battery module including a plurality of batteries, and/or a battery pack including a plurality of battery modules. In this case, the electronic device may require high power and/or high capacity and includes, for example, an electric vehicle or the like.

In a battery module that includes a plurality of battery cells, at least some of the plurality of battery cells may be connected by a bus bar. For example, a bus bar is located at an upper end of the plurality of battery cells and electrically connects the plurality of battery cells.

Each of the battery cells includes an electrode assembly and a case that accommodates the electrode assembly. The battery cell further includes a terminal to allow the electrode assembly to be electrically connected to outside of the case. The battery cell is connected to the bus bar through the terminal.

The battery cell must be firmly fixed to the bus bar. If the battery cell is separated from the bus bar due to internal or external shock, safety or performance issues with the battery cell may occur. Accordingly, the battery cell is typically fixed to the bus bar by welding the terminal to the bus bar.

The above-described information is merely intended to improve understanding of the background of the present disclosure and thus may include information that does not form the related art.

### SUMMARY

The present disclosure provides a battery module capable of reducing process dispersion from welding of a bus bar to a battery cell.

The present disclosure is directed to providing a geometry of a welding part that bonds a battery cell and a bus bar.

The present disclosure is also directed to providing a geometry of a welding part, capable of reducing dispersion during welding.

However, the problems to be solved by the present disclosure are not limited to the above-mentioned problems, and other problems not mentioned will clearly understood by those skilled in the art from the following description.

According to an aspect of the present disclosure, there is provided a battery module including a plurality of battery cells, a bus bar configured to electrically connect at least two of the battery cells, and bonding portions configured to bond battery cells to the bus bar, wherein each of the bonding portions includes a first bonding portion on, e.g. formed on, a first region of one of the battery cells, and a second bonding portion on, e.g. formed on, a second region on the battery cell, with the second bonding portion being larger than the first bonding portion.

The second region may be located closer to another battery cell connected by the bus bar than the first region is to the another battery cell connected by the bus bar.

When viewed from above the battery cell, the first bonding portion may include m lines, where m is greater than or equal to 1, and the second bonding portion may include n lines, where n is greater than or equal to 2, and n is greater than m.

When viewed from above the battery cell, the second bonding portion may be formed to have a larger area than an area of the first bonding portion.

When viewed from above the battery cell, the second bonding portion may be formed to have a length greater than the first bonding portion in a direction that is perpendicular to a longitudinal direction of the bus bar.

When viewed from above the battery cell, the second bonding portion may include a line that is thicker than a line of the first bonding portion.

When viewed from above the battery cell, the second bonding portion and the first bonding portion may be connected to each other to form at least one shape of D, ∝(proportionality sign), ◑ (circle with left(or right) half black), ▷ (right(or left)-pointing triangle), and Þ(thorn(letter))

The battery cell may be electrically connected to the bus bar in the second region.

The bonding portion may bond the battery cell and the bus bar by welding.

The welding may include at least one of electron beam welding, laser welding, ultrasonic welding, and friction welding.

The plurality of battery cells may comprise:

a first battery cell; and
a second battery cell,
wherein the second bonding portion of the bonding portion configured to bond the first battery cell to the bus bar is positioned closer to the bonding portion configured to bond the second battery cell to the bus bar than the first bonding portion of the bonding portion configured to bond the first battery cell to the bus bar, and
wherein the second bonding portion of the bonding portion configured to bond the second battery cell to the bus bar is positioned closer to the bonding portion configured to bond the first battery cell to the bus bar than the first bonding portion of the bonding portion configured to bond the second battery cell to the bus bar.

According to another aspect of the present disclosure, a battery module includes a first battery cell and a second battery cell, a bus bar configured to electrically connect at the first and second battery cells, a bonding portion configured to bond the first battery cell to the bus bar, and a bonding portion configured to bond the second battery cell to the bus bar, wherein the bonding portion of the first battery cell includes a first bonding portion and a second bonding portion, with the second bonding portion be positioned closer to the bonding portion of the second battery cell than the first bonding portion is to the bonding portion of the second battery cell, and the second bonding portion being larger than the first bonding portion, and wherein the bonding portion of the second battery cell includes a first bonding portion and a second bonding portion, with the second bonding portion be positioned closer to the bonding portion of the first battery cell than the first bonding portion is to the bonding portion of the first battery cell, and the second bonding portion being larger than the first bonding portion.

At least some of the above and other features of the invention are set out in the claims.

## BRIEF DESCRIPTION OF THE DRAWINGS

The following drawings attached to the present specification illustrate example embodiments of the present disclosure, and serve to further understand the technical scope of the present disclosure together with the detailed description of the present disclosure to be described later, and thus the present disclosure should not be construed as being limited to details shown in the accompanying drawings, in which:

FIG. 1 is a cross-sectional view of a battery cell according to an embodiment of the present disclosure;
FIG. 2 is a view of a battery module according to an embodiment of the present disclosure;
FIG. 3A and FIG. 3B are views of an example of incomplete welding occurring because of dispersion during welding;
FIG. 4 is a view of the battery module according to an embodiment of the present disclosure;
FIG. 5 is a view of the battery module according to an embodiment of the present disclosure;
FIG. 6 is a cross-sectional view taken along line X-X' of FIG. 5;
FIG. 7 is a cross-sectional view taken along line Y-Y' of FIG. 5;
FIG. 8A and FIG. 8B are views illustrating geometries of a bonding portion according to an embodiment of the present disclosure;
FIG. 9A and FIG. 9B are views illustrating geometries of the bonding portion according to an embodiment of the present disclosure; and
FIG. 10A and FIG. 10B are views comparing temperatures of a bus bar on which a conventional bonding portion is formed and a bus bar on which the bonding portion according to an embodiment of the present disclosure is formed.

## DETAILED DESCRIPTION

Hereinafter, embodiments of the present disclosure will be described in detail. However, the embodiments are only examples of the present disclosure, and the present disclosure is not limited to the disclosed embodiments.

Unless otherwise specified herein, when a part such as a layer, a film, an area, or a plate is described as being "on" another part, this includes not only a case where the part is "directly on" another part, but also a case where still another part is present therebetween.

Unless otherwise specified herein, a singular expression may also include a plural meaning. In addition, unless otherwise specified, "A or B" may mean "including A, including B, or including A and B."

As used herein, "a combination thereof" may mean a mixture, a laminate, a composite, a copolymer, an alloy, a blend, a reaction product, and the like of components.

Unless otherwise defined herein, the term "particle diameter" may refer to an average particle diameter. In addition, particle diameter refers to an average particle diameter (D50), which means a diameter of particles with a cumulative volume of 50% by volume in a particle size distribution. The average particle diameter (D50) may be measured by a method well known to those skilled in the art, for example, by a particle size analyzer, or by a transmission electron microscopic image or a scanning electron microscopic image. Alternatively, after measuring using a measuring device using dynamic light-scattering, performing data analysis, counting the number of particles for each particle size range, and then calculating, the average particle diameter (D50) may be easily obtained. Alternatively, the average particle diameter (D50) may be measured by a laser diffraction method. More specifically, when measured by the laser diffraction method, the average particle diameter (D50) may be measured by dispersing particles in a dispersion solvent and introducing the dispersed particles to a commercially available laser diffraction particle size measuring device (e.g., MT 3000 available from Microtrac, Ltd.,) irradiating ultrasonic waves of about 28 kHz at a power of 60 W, and calculating an average particle diameter (D50) in the 50% standard of particle distribution in the measuring device.

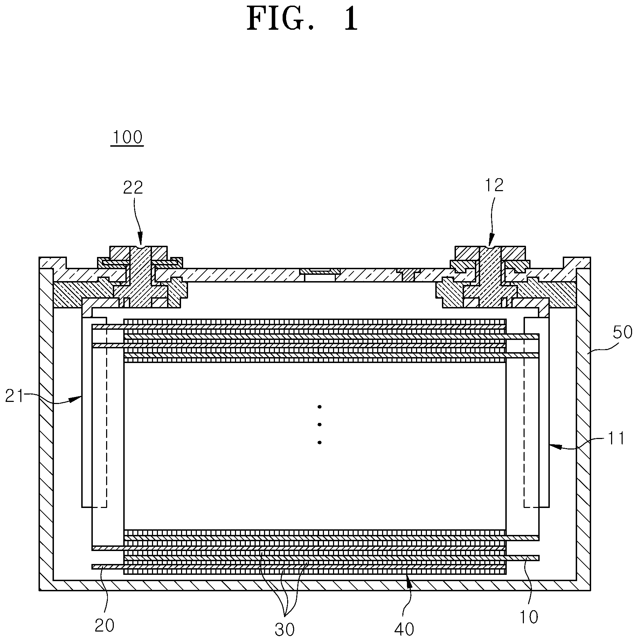

FIG. 1 is a cross-sectional view schematically illustrating a battery cell 100 according to an embodiment of the present disclosure.

## Battery cell 100

A battery cell may be classified as cylindrical, prismatic, pouch-type, and coin-type battery cells, depending on its shape. FIG. 1 is a schematic view illustrating the battery cell 100 according to an embodiment, and it may be said that FIG. 1 illustrates a prismatic battery shape. Referring to FIG. 1, the battery cell 100 may include an electrode assembly 40 including a separator 30 interposed between a positive electrode 10 and a negative electrode 20, and a case 50 in which the electrode assembly 40 is housed. The positive electrode 10, the negative electrode 20, and the separator 30 may be impregnated with an electrolyte (not shown). The battery cell 100 may also include a positive electrode lead tab 11, a positive electrode terminal 12, a negative electrode lead tab 21, and a negative electrode terminal 22.

## Positive electrode active material

As a positive electrode active material, a compound (lithiated intercalation compound) that is capable of reversible intercalation and deintercalation of lithium may be used. Specifically, one or more of a composite oxide of lithium and a metal selected from cobalt, manganese, nickel, and a combination thereof may be used.

The composite oxide may be a lithium-transition metal composite oxide, and specific examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any one of the following chemical formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); or $Li_aFePO_4$ ($0.90 \leq a \leq 1.8$). In the these formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

As an example, the positive electrode active material may be a high-nickel-based positive electrode active material having a nickel content of greater than or equal to 80 mol %, greater than or equal to 85 mol %, greater than or equal to 90 mol %, greater than or equal to 91 mol %, or greater than or equal to 94 mol % and less than or equal to 99 mol %, based on 100 mol % of the metal in the lithium-transition metal composite oxide excluding lithium. The high-nickel-based positive electrode active material may be capable of providing high capacity and can be applied to high-capacity and high-density lithium batteries.

## Positive electrode 10

The positive electrode 10 for the battery cell 100 may include a current collector and a positive electrode active material layer formed on the current collector. The positive electrode active material layer includes a positive electrode active material and may further include a binder and/or a conductive material. The positive electrode may further include an additive that can serve as a sacrificial positive electrode.

An amount of the positive electrode active material may be 90 wt% to 99.5 wt% based on 100 wt% of the positive electrode active material layer, and an amount of each of the binder and the conductive material may be 0.5 wt% to 5 wt% based on 100 wt% of the positive electrode active material layer.

The binder serves to adhere positive electrode active material particles to each other and also to adhere the positive electrode active material to the current collector. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like. But the present disclosure is not limited to these examples.

The conductive material is used to provide conductivity to the electrode, and any material that does not cause a chemical change and is electrically conductive may be used in the configured battery. Examples of the conductive material may include a carbon-based material such as natural graphite, artificial graphite, carbon black, acetylene black, ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

Al may be used as the current collector, but the present disclosure is not limited thereto.

## Negative electrode active material

The negative electrode active material may include a material capable of reversible intercalation/deintercalation of lithium ions, a lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon may include graphite such as amorphous, plate shape, flake, spherical shape or fiber-shaped natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0 < x < 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles. For example, the silicon-carbon composite may include a secondary particle (core) in which silicon primary particles are agglomerated and an amorphous carbon coating layer (shell) located on the surfaces of the secondary particles. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

## Negative electrode 20

The negative electrode 20 for the battery cell 100 includes a current collector and a negative electrode active material layer located on the current collector. The negative electrode active material layer includes a negative electrode active material and may further include a binder and/or a conductive material. For example, the negative electrode active material layer may include 90 wt% to 99 wt% of the negative electrode active material, 0.5 wt% to 5 wt% of the binder, and 0 wt% to 5 wt% of the conductive material.

The binder serves to adhere negative electrode active material particles to each other and also to adhere the negative electrode active material to the current collector. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized. The dry binder may be, for example, polytetrafluoroethylene, polyvinylidene fluoride, a polyvinylidene fluoride-hexafluoropropylene copolymer, a polyethylene oxide, or a combination thereof.

The conductive material is used to provide conductivity to the electrode, and any material that does not cause a chemical change and is electrically conductive may be used in the configured battery. Specific examples of the conductive material may include a carbon-based material such as natural graphite, artificial graphite, carbon black, acetylene black, ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Electrolyte (not shown)

The electrolyte for the battery cell 100 includes a non-aqueous organic solvent and a lithium salt.

The non-aqueous organic solvent serves as a medium through which ions taking part in the electrochemical reaction of a battery can move. The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a lithium battery, and improves the movement of the lithium ions between positive and negative electrodes. Representative examples of the lithium salt may include one or or more of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator 30

Depending on the type of the battery cell 100, the separator 30 may be present between the positive electrode 10 and the negative electrode 20. The separator 30 may include polyethylene, polypropylene, polyvinylidene fluoride, or a multilayer film of two or more layers thereof. The separator may also include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof located on one surface or both surfaces of the porous substrate.

The porous substrate may be a polymer film formed of a polymer, or a copolymer or a mixture of two or more of polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, a glass fiber, TEFLON®), and polytetrafluoroethylene.

The organic material may include a polyvinylidene fluoride-based polymer or a (meth)acrylic-based polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof. But the present disclosure is not limited to these examples.

The organic and inorganic materials may be present by being mixed in one coating layer or may be present in a form in which a coating layer including organic materials and a coating layer including inorganic materials are stacked.

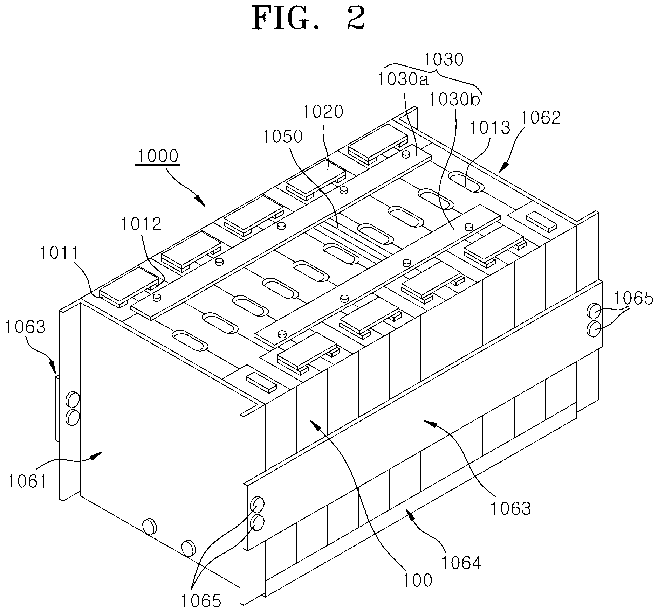

FIG. 2 is a view of a battery module 1000 according to an embodiment of the present disclosure.

The battery module 1000 includes a plurality of battery cells 100, a housing 1061, 1062, 1063, 1064, and 1065 in which the plurality of battery cells 100 are accommodated, and bus bars that electrically connect at least some of the plurality of battery cells 100. The plurality of battery cells 100 may include, for example, the battery cell 100 described with reference to FIG. 1 and may be arranged in one direction in the housing 1061 to 1065.

The housing 1061 to 1065 may include a pair of end plates 1061, 1062 facing a wide surface of each of the battery cells 100, side plates 1063 that connect the pair of end plates 1061, 1062, and a bottom plate 1064. The side plates 1063 may support side surfaces of the battery cells 100, and the bottom plate 1064 may support bottom surfaces of the battery cells 100. In addition, the pair of end plates 1061 and 1062, the side plates 1063, and the bottom plate 1064 may be connected to each other by members such as bolts 1065.

The battery module 1000 includes terminal portions 1011, 1012, connection tabs 1020 connecting adjacent battery cells 100, and a protection circuit module 1030 having one side end portion connected to the connection tabs 1020. The protection circuit module 1030 may be a battery management system (BMS). In addition, the connection tabs 1020 may be bus bars.

The terminal portions 1011, 1012, which are electrically connected to the connection tab 1020, and a vent 1013, which is an exhaust path for gas generated inside the battery cells 100, may be provided on one side of the battery cells 100. The terminal portions 1011, 1012 of the battery cells 100 may be a positive electrode terminal 1011 and a negative electrode terminal 1012 having different polarities, and the terminal portions 1011, 1012 of the battery cells 100 adjacent to each other may be electrically connected in series or in parallel by the connection tab 1020. While a series connection is described as an example, the present disclosure is not limited to such a configuration, and various connection structures may be adopted as needed. In addition, the number and arrangement of the battery cells 100 are not limited to the configuration shown in FIG. 2 and may be changed as needed.

The protection circuit module 1030 may include electronic components, protection circuits, and the like mounted therein and may be electrically connected to the connection tabs 1020. The protection circuit module 1030 includes a first protection circuit module 1030a and a second protection circuit module 1030b extending at different positions in the direction in which the plurality of battery cells 100 are arranged. The first protection circuit module 1030a and the second protection circuit module 1030b may be spaced apart from each other at a predetermined distance and parallel to each other, and may each be electrically connected to the adjacent connection tabs 1020. For example, the first protection circuit module 1030a is formed to extend on one side of an upper portion of each of the plurality of battery cells 100 in the direction in which the plurality of battery cells 100 are arranged, and the second protection circuit module 1030b is formed to extend on the other side of the upper portion of each of the plurality of battery cells 100 in the direction in which the plurality of battery cells 100 are arranged. The second protection circuit module 1030b may be spaced apart from and parallel to the first protection circuit module 1030a at a predetermined distance with the vents 1013 interposed therebetween. As the two protection circuit modules 1030a, 1030b are disposed in parallel and spaced apart from each other in the direction in which the plurality of battery cells 100 are arranged, the area of a printed circuit board (PCB) constituting the protection circuit module 1030 is minimized. That is, by configuring the protection circuit module 1030 separately into two protection circuit modules 1030a, 1030b, unnecessary PCB area is minimized. In addition, the first protection circuit module 1030a and the second protection circuit module 1030b may be connected to each other by a connecting member 1050 having conductivity. That is, one side of the connecting member 1050 may be connected to the first protection circuit module 1030a, and the other side thereof may be connected to the second protection circuit module 1030b, thereby allowing an electrical connection between the two protection circuit modules 1030a, 1030b. The connection may be formed by any one of soldering, resistance welding, laser welding, and projection welding methods. In addition, the connecting member 1050 may be, for example, an electrical wire and may be made of an elastic or flexible material. With the connecting member 1050, the voltage, temperature, and current of the plurality of battery cells 100 may be checked and managed. That is, information such as voltage, current, and temperature received by the first protection circuit module 1030a from the connection tabs adjacent to the first protection circuit module 1030a and information such as voltage, current, and temperature received by the second protection circuit module 1030b from the connection tabs adjacent to the second protection circuit module 1030b may be integrated and managed by the protection circuit module 1030 through the connecting member. In addition, when one or more of the battery cells 100 swell, impacts may be absorbed by the elasticity or flexibility of the connecting member 1050, thereby preventing damage to the first and second protection circuit modules 1030a, 1030b.

The shape and structure of the connecting member 1050 is not limited to that depicted in FIG. 2.

As described above, because the protection circuit module 1030 is comprised of the first and second protection circuit modules 1030a, 1030b, the area of the PCB constituting the protection circuit module 130 can be minimized, thereby providing space inside the battery module 1000. This improves work efficiency by facilitating not only a coupling work of connecting the connection tab 1020 and the protection circuit module 1030, but also repair work when an abnormality is detected in the battery module.

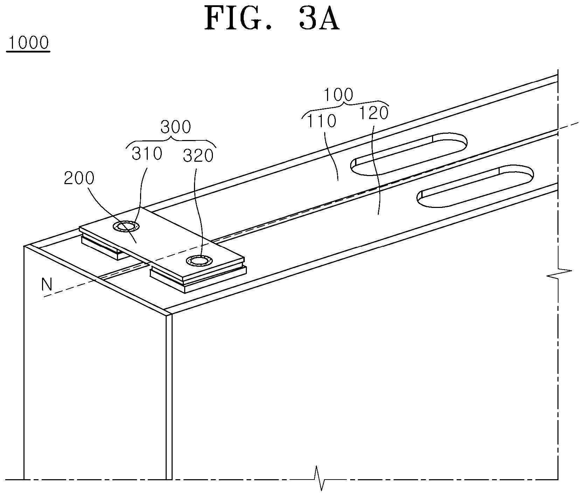

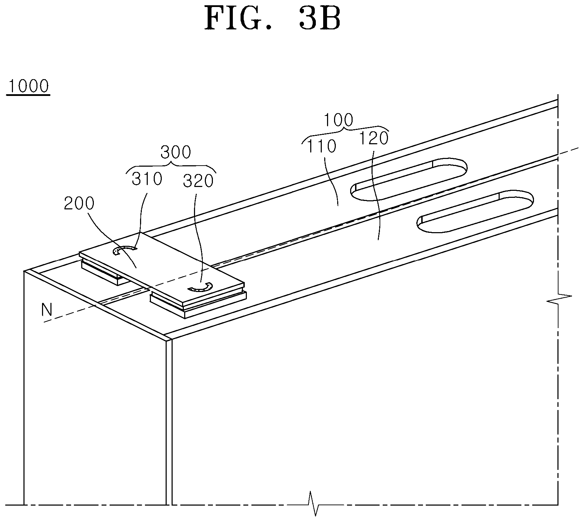

FIG. 3A and FIG. 3B are views of an example of an incomplete welding occurring because of dispersion during welding.

In FIG. 3, 100 denotes a battery cell according to one embodiment of the present disclosure (e.g., including the battery cell 100 described with reference to FIGS. 1 and 2). In addition, in FIG. 3, 1000 denotes a battery module according to one embodiment of the present disclosure (e.g., including the battery module 1000 described with reference to FIG. 2).

As shown in FIG. 3, the battery module 1000 includes a plurality of battery cells 100, a bus bar 200, and bonding portions 300. The plurality of battery cells 100 include, for example, a first battery cell 110 and a second battery cell 120 that are located adjacent to each other. One surface of the first battery cell 110 and one surface of the second battery cell 120 may be in contact with each other.

The bus bar 200 electrically connects at least two of the plurality of battery cells 100. For example, the bus bar 200 electrically connects two or more battery cells 100 located adjacent to each other. However, the bus bar 200 may electrically connect battery cells 100 that are spaced apart from each other. In the depicted example, the bus bar 200 electrically connects the first battery cell 110 and the second battery cell 120.

In particular, the bus bar 200 is connected to a terminal of each of the plurality of battery cells 100. For example, the bus bar 200 is connected to a negative electrode terminal (e.g., including the negative electrode terminal 22 described with reference to FIG. 1) of one battery cell 100 among two or more battery cells 100 located adjacent to each other, and a positive electrode terminal (e.g., including the positive electrode terminal 12 described with reference to FIG. 1) of another battery cell 100. Through this, the bus bar 200 connects one battery cell 100 and another battery cell 100.

The bus bar 200 and the battery cells 100 should be fixed to each other. When the battery cells 100 are not fixed to the bus bar 200, electrons contained in the battery cells 100 may not move properly along the bus bar 200. Alternatively, a resistance of the bus bar 200 may increase, and, thus, the efficiency of the electrical connection between the battery cell 100 and the bus bar 200 may decrease. In this case, there is a problem of efficiency deterioration during charging and/or discharging of the battery cells 100. Furthermore, the temperature of the battery cells 100 may increase, which may cause safety issues in the battery module 1000 including the battery cells 100. Accordingly, there is a need for a method that makes the battery cells 100 and the bus bar 200 to be strongly bonded.

The bonding portions 300 bond the battery cells 100 and the bus bar 200. The bonding portions 300 allow the battery cells 100 to be fixed to the bus bar 200. In particular, the bonding portions 300 bond the battery cells 100 and the bus bar 200 through welding.

FIG. 3A illustrates an example in which the bonding portion 300 is formed in a ring shape. However, when the welding process is repeatedly performed, incomplete welding as shown in FIG. 3B may occur due to dispersion. Thus, the bonding portion 300 may not be formed in the ring shape. In such a case, resistance of the bus bar 200 may increase, which may cause heat generation and/or deterioration of the performance of the battery module 1000 during charging/discharging.

Hereinafter, a geometry of the bonding portion 300 will be described. Specifically, a geometry of the bonding portion 300 that can prevent the incomplete welding even when there is dispersion during welding.

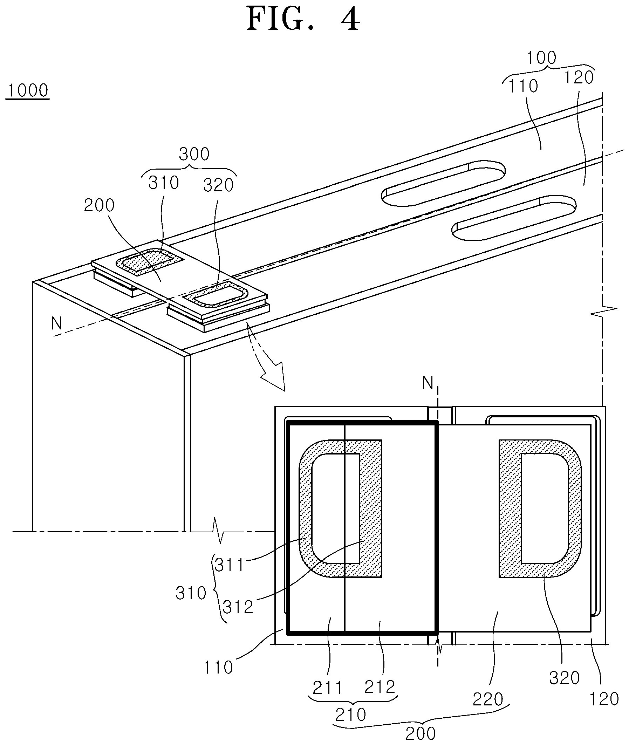

FIG. 4 is a view illustrating a battery module 1000 according to an embodiment of the present disclosure.

As described with reference to FIGS. 1 to 3, the battery module 1000 according to an embodiment of the present disclosure includes the plurality of battery cells 100, the bus bar 200 that electrically connects at least two of the plurality of battery cells 100, and the bonding portions 300 that bond the battery cells 100 and the bus bar 200. In FIG. 4, for convenience of description, a case in which the plurality of battery cells 100 include two battery cells, which are a first battery cell 110 and a second battery cell 120, is illustrated as an example. But, the plurality of battery cells 100 may include more than two battery cells 100. In addition, in FIG. 4, for convenience of description, a case in which the bus bar 200 electrically connects two battery cells 100 adjacent to each other is illustrated as an example. But, in other embodiments of the present disclosure, the bus bar 200 may electrically connect battery cells 100 spaced apart from each other and/or more than two battery cells 100.

In FIG. 4, an enlarged top view of a region in which the battery cells 100 and the bus bar 200 are bonded by the bonding portions 300.

As shown in FIG. 4, each bonding portion 300 according to an embodiment of the present disclosure is formed on each battery cell 100.

The bonding portion 300 bonds the battery cells 100 and the bus bar 200. For example, the bonding portion 300 bonds the battery cells 100 and the bus bar 200 by welding. The welding may include, for example, at least one of electron beam welding, laser welding, ultrasonic welding, and friction welding.

The bonding portions 300 include a first bonding portion 310 (e.g. first side bonding portion), which bonds the first battery cell 110 and the bus bar 200, and a second bonding portion 320 (e.g. second side bonding portion), which bonds the second battery cell 120 and the bus bar 200. The first bonding portion 310 is located on a first side 210 of the bus bar 200, and the second bonding portion 320 is located on a second side 220 of the bus bar 200. The first side 210 and the second side 220 of the bus bar 200 may be divided by a boundary of the battery cells 100. The boundary of the battery cell 100s, for example, corresponds to surfaces at which the adjacent battery cells 100 are in contact with each other. That is, when viewed from the top of the battery module 1000, the first battery cell 110 and the second battery cell 120 are adjacent to each other at the boundary of the battery cells 100.

The first bonding portion 310 (e.g. first side bonding portion) bonds the negative or positive electrode terminal of the first battery cell 110 and the bus bar 200. The second bonding portion 320 (e.g. second side bonding portion) bonds the positive or negative electrode terminal of the second battery cell 120 and the bus bar 200. A polarity of the terminal to which the first bonding portion 310 is bonded may be different from a polarity of the terminal to which the second bonding portion 320 is bonded.

Each bonding portion 300 is formed on a first region 211 and a second region 212 on the battery cell 100. The first region 211 is located on an upper surface of the battery cell 100 that is farther from the second battery cell 120 that is connected by the bus bar 200. That is, the first region 211 of the first battery cell 110 is located farther from the second battery cell 120 on an upper surface of the first battery cell 110. The second region 212 is located closer to the second battery cell on the upper surface of the battery cell 100. That is, the second region 212 of the first battery cell 110 is located closer to the second battery cell 120 on the upper surface of the first battery cell 110. Thus, the second region 212 is located closer to the second battery cell 120 than the first region 211. An area ratio of the first region 211 and the second region 212 may be, for example, 5:5. Alternatively, the area ratio of the first region 211 and the second region 212 may be, for example, about 4:6 to 6:4.

For convenience of description, the bonding portion formed on the first region 211 may be referred to as a first bonding portion 311, and the bonding portion formed on the second region 212 may be referred to as a second bonding portion 312.

The second bonding portion 312 may be distributed wider than the first bonding portion 311. As described above, the second bonding portion 312 is formed on the second region 212 and is located closer to the second battery cell 120, which is connected by the bus bar 200, than the first bonding portion 311. Thus, the bonding portion 300 according to an embodiment of the present disclosure is formed such that the side facing the adjacent battery cell 100 is distributed wider than the side not facing the adjacent battery cell 100.

In the case of FIG. 4, the second bonding portion 312 is located closer to the second battery cell 120 and the first bonding portion 311 is located farther from the second battery cell 120. The second bonding portion 312 may be spread widely on the first battery cell 110, and the first bonding portion 311 may be formed to spread narrowly on the first battery cell 110.

As apparent from the above description, the first region 211 and the second region 212 are not physically divided sections, but rather are regions that are relatively farther from and closer to the electrically connected battery cell. Accordingly, as long as the side of the bonding portion 300 that is closer to the electrically connected battery is formed to be distributed wider than the side farther from the electrically connected battery, the bonding portion 300 is according to an embodiment of the present disclosure. Accordingly, the second bonding portion 312 serves as a path through which the bus bar 200 is electrically conducted to the corresponding battery cell (e.g., the first battery cell 110).

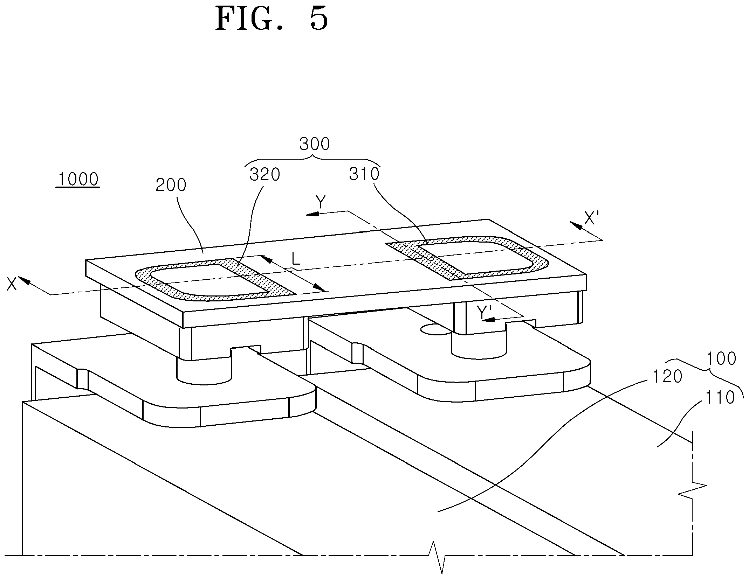

With this configuration, the bonding portions 300 according to an embodiment of the present disclosure can have wider bonding regions toward the battery cells 100 that are connected to each other. The bonding portions 300 thereby remain in the direction toward the battery cells 100 that are connected to each other even if incomplete welding occurs because of dispersion. Accordingly, the battery module 1000 according to an embodiment of the present disclosure prevents heat generation and maintains charge/discharge efficiency even in the event of incomplete welding. This will be described in more detail with reference to FIGS. 5 to 7 below.

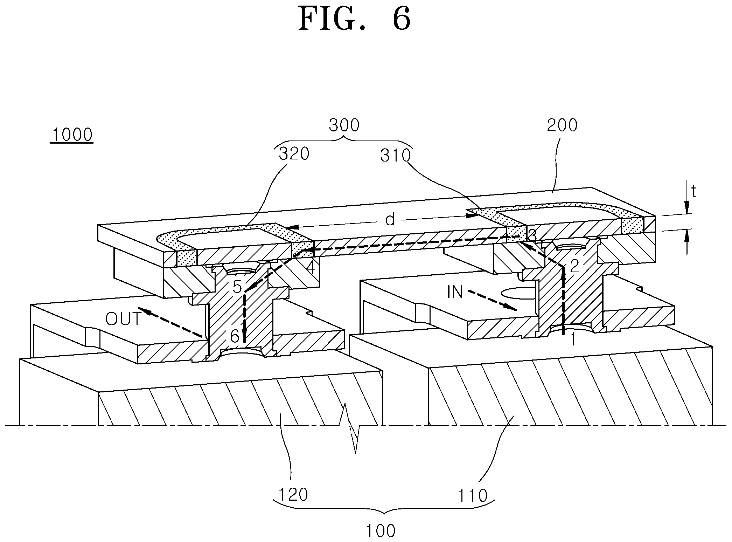

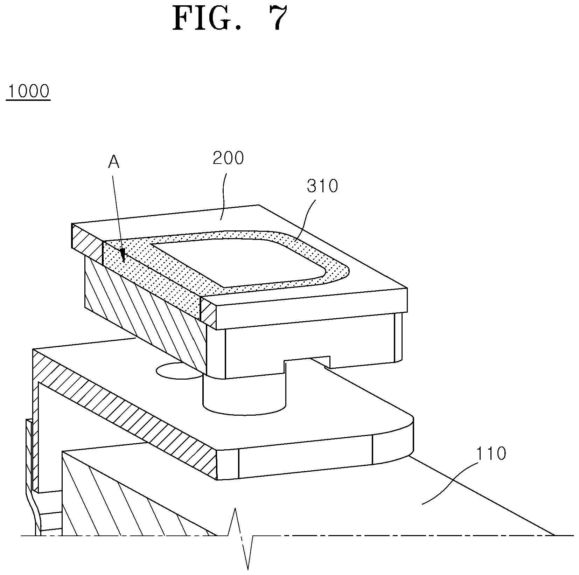

FIG. 5 is a view of the battery module 1000 according to an embodiment of the present disclosure. FIG. 6 is a cross-sectional view taken along line X-X' of FIG. 5. FIG. 7 is a cross-sectional view taken along line Y-Y' of FIG. 5.

As described with reference to FIGS. 1 to 4, the battery module 1000 according to an embodiment of the present disclosure includes the plurality of battery cells 100, the bus bar 200 that electrically connects at least two of the plurality of battery cells 100, and the bonding portions 300 that bond the battery cells 100 and the bus bar 200.

In FIG. 5, line X-X' is parallel to a longitudinal direction of the bus bar 200. FIG. 6 illustrates a cross section of the bus bar 200 when the bus bar 200 is cut vertically along line X-X'.

In FIG. 5, line Y-Y' is perpendicular to the longitudinal direction of the bus bar 200. In addition, line Y-Y' overlaps the second bonding portion 312 in the bonding portion 300 formed on the bus bar 200. That is, when the bonding portion 300 includes the first side bonding portion 310 and the second side bonding portion 320, line Y-Y' overlaps a region of the one-side bonding portion 310 that is closest to the second side bonding portion 320. FIG. 7 is a cross section of the bus bar 200 when the bus bar 200 is cut vertically along line Y-Y'.

In FIG. 6, arrows indicate the flow of current from the first battery cell 110 through the bus bar 200 to the second battery cell 120. For example, the current flows from the first battery cell 110 to the bus bar 200, from "1" to "2." The current flows toward the first side bonding portion 310 that is bonded to the bus bar 200, from "2" to "3." The current moves along the bus bar 200 from the first side bonding portion 310 and flows toward the second side bonding portion 320, from "3" to "4." The current flows from the second side bonding portion 320 toward the second battery cell 120, passing from "4" to "5" and then to "6."

Given the flow of current, it can be seen that a distance between the first side bonding portion 310 and the second side bonding portion 320 has a significant influence on the flow of current between the battery cells 100. For description, a thickness of the bus bar 200 is referred to as t, the shortest distance between the first side bonding portion 310 and the second side bonding portion 320 is referred to as d and, a length of the bonding portion 300 that is a length of the bonding portion 300 perpendicular to the longitudinal direction of the bus bar 200 is referred to as L. In addition, a cross section of the bonding portion 300 formed in a depth direction of the bus bar 200 is referred to as A (the depth direction of the bus bar 200, which is perpendicular to the longitudinal direction of the bus bar 200 and is directed from the bus bar 200 toward the upper surface of the battery cell 100. A resistance generated by the current flowing from the first battery cell 110 to the second battery cell 120 is given by Equation 1.

[Equation 1]

$$Restance \propto \frac{d}{A} = \frac{d}{t \times L}$$

From Equation 1, it can be seen that in order to reduce the resistance when the current flows from "3" to "4," t or L must be increased or d must be decreased.

Based on this principle, in an embodiment of the present disclosure the first bonding portion 310 (e.g. first side bonding portion) and the second bonding portion 320 (e.g. second side bonding portion) are formed closer to each other to reduce the distance d in the bonding portion 300. For example, the first bonding portion 310 (e.g. first side bonding portion) and the second bonding portion 320 (e.g. second side bonding portion) are formed to be distributed over a wider region on the sides facing each other, thereby reducing d. Alternatively, in the bonding portion 300 according to an embodiment of the present disclosure, in order to increase t or L, the first bonding portion 310 (e.g. first side bonding portion) and the second side bonding portion 320 (e.g. second side bonding portion) are distributed over a wider region on the sides that face each other.

For example, the bonding portion 300 (for example, the one-side bonding portion 310 and/or the other-side bonding portion 320) includes the first bonding portion 311 and the second bonding portion 312. When viewed from the top of the battery cell 100, the first bonding portion 311 includes m lines, with m being a natural number greater than or equal to 1. When viewed from the top of the battery cell 100, the second bonding portion 312 includes n lines, with n being a natural number greater than or equal to 2 and having a value greater than that of m. As the second bonding portion 312 is formed with a greater number of lines than the first bonding portion 311, the second bonding portion 312 is wider than the first bonding portion 311.

Alternatively or in addition, when viewed from the top of the battery cell 100, the second bonding portion 312 may be formed to have a larger area than the first bonding portion 311. That, the second bonding portion 312 may be formed to be widely distributed across a larger region than the region across which the first bonding portion 311 is distributed.

Alternatively or in addition, when viewed from the top of the battery cell 100, the second bonding portion 312 may be formed with a longer length in a direction perpendicular to the longitudinal direction of the bus bar than the first bonding portion 311. Thus, the second bonding portion 312 may be formed to be distributed across a wider region by being longer than the first bonding portion 311.

Alternatively in addition, when viewed from the top of the battery cell 100, the second bonding portion 312 may include a line that is thicker than a line of the first bonding portion 311. Thus, the second bonding portion 312 may be distributed across a wider region by including a thicker line than a line of the first bonding portion 311.

Hereinafter, examples of the geometry of the bonding portion 300 will be described with reference to the drawings.

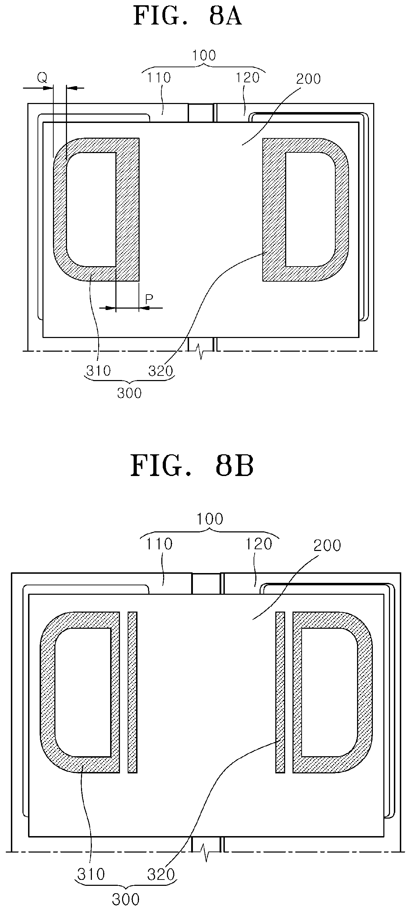

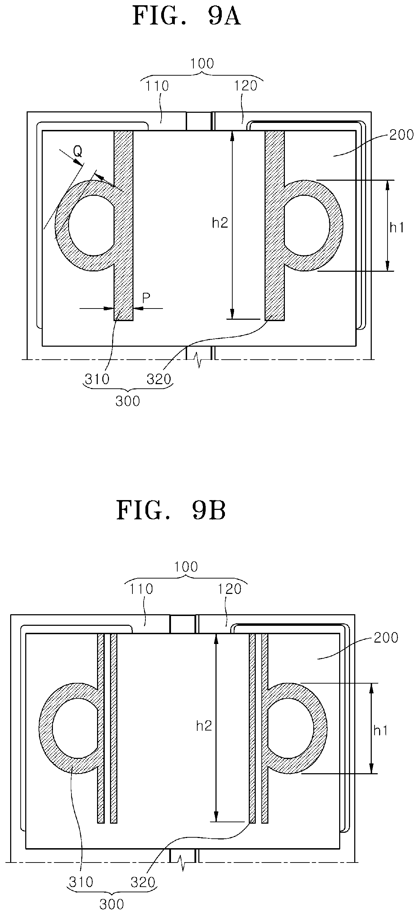

In the examples described with reference to FIGS. 8 and 9 below, the plurality of battery cells 100 include the first battery cell 110 and the second battery cell 120. In addition, the first battery cell 110 is bonded to the bus bar 200 through the first side bonding portion 310, and the second battery cell 120 is bonded to the bus bar 200 through the second side bonding portion 320.

FIG. 8A and FIG. 8B are views of geometries of a bonding portion according to an embodiment of the present disclosure.

FIG. 8A and FIG. 8B are views of a configuration in which the plurality of battery cells 100 and the bus bar 200 are bonded by the bonding portions 300, as viewed from the top of the battery module 1000. As described above with reference to FIGS. 4 to 7, the bonding portion 300 is formed such that the side closer to the battery cell 100 connected by the bus bar 200 is distributed wider than the side farther from the battery cell 100.

FIG. 8A illustrates an example in which a thickness P of the second bonding portion is greater than a thickness Q of the first bonding portion. For example, in the first side bonding portion 310, the thickness P of the second bonding portion on the side closer to the second side bonding portion 320 may be greater than the thickness Q of the first bonding portion on the side farther from the second side bonding portion 320. As described above, in the bonding portion 300 according to an embodiment of the present disclosure, the thickness or area of the second bonding portion, which acts as a path through which current passes, is increased. Thus, problems caused by incomplete welding and/or reducing a resistance are prevented.

FIG. 8B illustrates an example in which the second bonding portion includes a greater number of lines than the first bonding portion. For example, the first side bonding portion 310 may be formed such that the second bonding portion on the side closer to the second side bonding portion 320 includes two lines, and the first bonding portion on the side farther from the second side bonding portion 320 includes one line. As described above, in the bonding portion 300 according to an embodiment of the present disclosure, by increasing the number of lines in the second bonding portion that serves as a path through which current flows, problems caused by incomplete welding may be prevented and/or a resistance may be reduced.

FIG. 9A and FIG. 9B are views illustrating geometries of the bonding portion according to an embodiment of the present disclosure. In particular, FIG. 9A and FIG. 9B are a top view illustrating a state in which the plurality of battery cells 100 and the bus bar 200 are bonded by the bonding portions 300. As described above with reference to FIGS. 4 to 7, the bonding portion 300 is formed such that the side closer to the battery cell 100 connected by the bus bar 200 is distributed wider than the side farther from the battery cell 100.

FIG. 9A illustrates an example in which a length h2 of the second bonding portion is greater than a length h1 of the first bonding portion. For example, in the first side bonding portion 310, the length h2 of the second bonding portion on the side closer to the first side bonding portion 320 may be greater than the length h1 of the first bonding portion on the side farther from the second side bonding portion 320. As described above, in the bonding portion 300 according to an embodiment of the present disclosure, by increasing the length of the second bonding portion that serves as a path through which current flows, problems caused by incomplete welding may be prevented and/or a resistance may be reduced.

Further, the second bonding portion may be formed to have the length h2 that is greater than the length h1 of the first bonding portion, and at the same time, second bonding portion may have the thickness P that is greater than the thickness Q of the first bonding portion. With such a configuration, the bonding portion 300 according to an embodiment of the present disclosure can prevent problems due to the incomplete welding and/or further reduce the resistance.

FIG. 9B illustrates an example in which the second bonding portion has the length h2, which is greater than the length h1 of the first bonding portion, and which includes a greater number of lines than the first bonding portion. Accordingly, the bonding portion 300 according to an embodiment of the present disclosure can prevent problems due to the incomplete welding and/or further reduce the resistance.

The geometry of the bonding portion 300 according to embodiments of the present disclosure is not limited to the examples described with reference to FIGS. 3 to 9. As described above, the bonding portion 300 may be formed in any geometry that is distributed across a wider range in a direction toward another battery cell 100 connected through the bus bar 200. For example, when viewed from the top of the bonding portion 300, the second bonding portion 312 and the first bonding portion 311 may be connected to each other to form a shape such as at least one of D, $\propto$(proportionality sign), ◐ (circle with left(or right) half black), ▷ (right(or left)-pointing triangle), and Þ(thorn(letter)). In this case, if the shape is >, when viewed from above, the one-side bonding portion 310 and the other-side bonding portion 320 may be formed "" ◁ ▷ ,".

In FIGS. 3 to 9B, an example in which the first side bonding portion 310 and the second side bonding portion 320 are formed symmetrically to each other has been depicted and described, but the geometry of the bonding portion 300 according to embodiments of the present disclosure is not limited thereto. As long as the bonding portion 300 is distributed across a wider range toward the other battery cell 100, which is connected by the bus bar 200, the first side bonding portion 310 and the second side bonding portion 320 may be formed to be asymmetrical to each other.

FIG.s 10A and 10B are views comparing temperatures of a bus bar on which the conventional bonding portion is formed and the bus bar 200 on which the bonding portion according to an embodiment of the present disclosure is formed. In particular, FIG.s 10A,10B illustrate temperatures measured when the battery module was charged with a current of 324 A for 505 seconds.

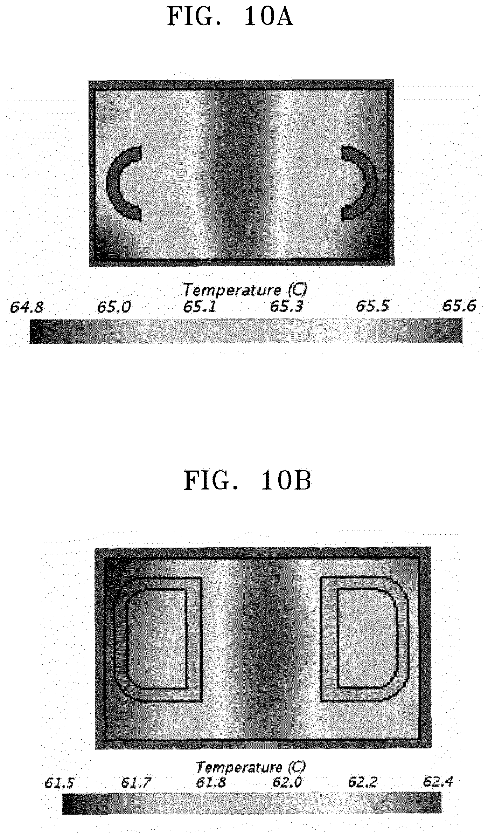

FIG. 10A illustrates the temperatures of the bus bar on which a conventional bonding portion is formed. The bonding portion applied to FIG. 10A was a half-ring-shaped such that bonding occurs only at an edge due to process dispersion. FIG. 10B illustrates the temperatures of the bus bar 200 on which the bonding portion according to an embodiment of the present disclosure is formed. The bonding portion applied in FIG. 10B is such that the side toward the connected battery cell is thick.

As can be seen in FIG. 10A, the maximum temperature of the conventional bus bar is 65.6 °C. And as can be seen in FIG. 10B, the maximum temperature of the bus bar 200 according to an embodiment of the present disclosure is 62.4 °C. That is, the maximum temperature of the bus bar 200 according to an embodiment of the present disclosure is 3.2 °C lower compared to a conventional bus bar. Thus, based on the experiment shown in FIG. 10, it can be seen that the embodiments of the present disclosure can suppress the increase in resistance of the bus bar 200 due to process dispersion.

According to the present disclosure, resistance of a bus bar can be reduced through a geometry of a welding part, a temperature of a bus bar can be reduced and, charging or discharging performance of each battery cell included in a battery module can be improved.

However, it will be appreciated by persons skilled in the art that the effects that can be achieved through the present disclosure are not limited to what has been described hereinabove and other advantages of the present disclosure will be more clearly understood from the following detailed description.

Although the present disclosure has been described with reference to the embodiments, the present disclosure is not limited thereto and may be variously implemented by those of ordinary skill in the art to which the present disclosure pertains.

**Claims**

1. A battery module comprising:

   a plurality of battery cells;
   a bus bar configured to electrically connect at least two of the battery cells; and
   bonding portions configured to bond the battery cells to the bus bar,
   wherein each of the bonding portions includes:

   a first bonding portion formed on a first region of one of the battery cells; and
   a second bonding portion formed on a second region of the battery cell, with the second bonding portion being larger than the first bonding portion.

2. The battery module of claim 1, wherein the second region is located closer to another battery cell of the plurality of battery cells connected by the bus bar than the first region is to said other battery cell connected by the bus bar.

3. The battery module of claim 1 or 2, wherein, when viewed from above the battery cell, the first bonding portion includes m lines and the second bonding portion includes n lines,

   where m is greater than or equal to 1,
   where n is greater than or equal to 2,
   and where n is greater than m.

4. The battery module according to any of claims 1 to 3, wherein, when viewed from above the battery cell, the second bonding portion is formed to have a larger area than the area of the first bonding portion.

5. The battery module according to any of claims 1 to 4, wherein, when viewed from above the battery cell, the second bonding portion is formed to have a length greater than the first bonding portion in a direction that is perpendicular to a longitudinal direction of the bus bar.

6. The battery module according to any of claims 1 to 5, wherein, when viewed from above the battery cell, the second bonding portion includes a line that is thicker than a line of the first bonding portion.

7. The battery module according to any of claims 1 to 6, wherein, when viewed from above the battery cell, the second bonding portion and the first bonding portion are connected to each other to form at least one shape of D, ∝(proportionality sign), ◖ (circle with left(or right) half black), ▷ (right(or left)-pointing triangle), and Þ(thorn(letter))

8. The battery module according to any of claims 1 to 7, wherein the battery cell is electrically connected to the bus bar in the second region.

9. The battery module according to any of claims 1 to 8, wherein the bonding portion bonds the battery cell and the bus bar by welding.

10. The battery module of claim 9, wherein the welding includes at least one of electron beam welding, laser welding, ultrasonic welding, and friction welding.

11. The battery module of any preceding claim,
wherein the plurality of battery cells comprise:

a first battery cell; and
a second battery cell,
wherein the second bonding portion of the bonding portion configured to bond the first battery cell to the bus bar is positioned closer to the bonding portion configured to bond the second battery cell to the bus bar than the first bonding portion of the bonding portion configured to bond the first battery cell to the bus bar, and
wherein the second bonding portion of the bonding portion configured to bond the second battery cell to the bus bar is positioned closer to the bonding portion configured to bond the first battery cell to the bus bar than the first bonding portion of the bonding portion configured to bond the second battery cell to the bus bar.

# FIG. 1

# FIG. 2

# FIG. 3A

1000

# FIG. 3B

# FIG. 4

# FIG. 5

1000

100 { 120, 110

300 { 310, 320

200

X, X', Y, Y', L

# FIG. 6

EP 4 636 934 A1

# FIG. 7

1000

# FIG. 8A

# FIG. 8B

# FIG. 9A

# FIG. 9B

# FIG. 10A

Temperature (C)

64.8    65.0    65.1    65.3    65.5    65.6

# FIG. 10B

Temperature (C)

61.5    61.7    61.8    62.0    62.2    62.4

Europäisches
Patentamt

European
Patent Office

Office européen
des brevets

# EUROPEAN SEARCH REPORT

**Application Number**

EP 25 16 9040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/210821 A1 (OKADA WATARU [JP] ET AL) 8 July 2021 (2021-07-08)<br>* figures 1, 2, 15, 16, 17 *<br>* paragraphs [0001], [0059], [0070], [0072] *<br>----- | 1-5,8-10 | INV.<br>H01M50/516<br>H01M50/528<br>H01M50/55<br>B23K26/20<br>H01M50/507 |
| X | EP 4 224 616 A1 (PRIME PLANET ENERGY & SOLUTIONS INC [JP]) 9 August 2023 (2023-08-09)<br>* figures 1, 5, 8 *<br>* paragraphs [0023], [0024], [0025] *<br>----- | 1,2,4-6, 8-11 | H01M50/557<br>H01M50/566<br>H01M50/502 |
| X | US 2020/388813 A1 (YAMAMOTO YUTA [JP]) 10 December 2020 (2020-12-10)<br>* figure 7 *<br>* paragraph [0029] *<br>----- | 1,4-9,11 | |

**TECHNICAL FIELDS
SEARCHED (IPC)**

H01M
B23K

The present search report has been drawn up for all claims

| Place of search | Date of completion of the search | Examiner |
|---|---|---|
| The Hague | 12 August 2025 | Gasner, Benoit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 9040

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2025

| Patent document cited in search report | | Publication date | Patent family member(s) | | Publication date |
|---|---|---|---|---|---|
| US 2021210821 | A1 | 08-07-2021 | CN | 108604658 A | 28-09-2018 |
| | | | CN | 113972446 A | 25-01-2022 |
| | | | JP | 6910965 B2 | 28-07-2021 |
| | | | JP | WO2017130706 A1 | 22-11-2018 |
| | | | US | 2021210821 A1 | 08-07-2021 |
| | | | WO | 2017130706 A1 | 03-08-2017 |
| EP 4224616 | A1 | 09-08-2023 | CN | 116454551 A | 18-07-2023 |
| | | | EP | 4224616 A1 | 09-08-2023 |
| | | | JP | 7488289 B2 | 21-05-2024 |
| | | | JP | 2023104196 A | 28-07-2023 |
| | | | US | 2023231325 A1 | 20-07-2023 |
| US 2020388813 | A1 | 10-12-2020 | CN | 111279521 A | 12-06-2020 |
| | | | JP | 7169287 B2 | 10-11-2022 |
| | | | JP | WO2019082956 A1 | 19-11-2020 |
| | | | US | 2020388813 A1 | 10-12-2020 |
| | | | WO | 2019082956 A1 | 02-05-2019 |

EPO FORM P0459

For more details about this annex : see Official Journal of the European Patent Office, No. 12/82